(19) Europäisches Patentamt / European Patent Office / Office européen des brevets

(11) **EP 4 427 937 A1**

(12) **EUROPEAN PATENT APPLICATION**
published in accordance with Art. 153(4) EPC

(43) Date of publication:
**11.09.2024 Bulletin 2024/37**

(21) Application number: **22890232.6**

(22) Date of filing: **20.10.2022**

(51) International Patent Classification (IPC):
**B32B 27/36** (2006.01)   **B32B 27/30** (2006.01)
**B32B 37/15** (2006.01)

(52) Cooperative Patent Classification (CPC):
**B32B 27/30; B32B 27/36; B32B 37/15;**
Y02W 90/10

(86) International application number:
**PCT/KR2022/016075**

(87) International publication number:
**WO 2023/080497 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2021  KR 20210149262**

(71) Applicant: **SK microworks Co., Ltd.**
**Suwon-si, Gyeonggi-do 16336 (KR)**

(72) Inventors:
• **HAN, Kweon Hyung**
  **Suwon-si, Gyeonggi-do 16338 (KR)**
• **LEE, Seokin**
  **Suwon-si, Gyeonggi-do 16338 (KR)**

(74) Representative: **Dehns**
**St. Bride's House**
**10 Salisbury Square**
**London EC4Y 8JD (GB)**

(54) **MULTILAYERED BIODEGRADABLE BARRIER FILM, MANUFACTURING METHOD THEREFOR, AND ECO-FRIENDLY PACKAGING MATERIAL COMPRISING SAME**

(57)    An embodiment relates to a multilayered biodegradable barrier film, a manufacturing method therefor, and an eco-friendly packaging material comprising same, and, in the multilayered biodegradable barrier film, two or more types of different resin layers are alternately stacked, the resin layers comprising: a first resin layer including an aliphatic polyester-based polymer; and a second resin layer including polyvinylalcohol (PVA).

[Fig. 1]

EP 4 427 937 A1

## Description

### Technical Field

The present invention relates to a multilayer biodegradable barrier film, to a process for preparing the same, and to an environmentally friendly packaging material comprising the same.

### Background Art

Plastic films commonly used for packaging purposes include cellophane, polyvinyl chloride (PVC), polyethylene (PE), polypropylene (PP), nylon, and polyethylene terephthalate (PET).

However, cellophane films cause severe environmental pollution during the preparation process; thus, their production is subject to a lot of regulations. Polyvinyl chloride films generate harmful substances such as dioxin when incinerated; thus, their use is subject to a lot of regulations. In addition, polyethylene films lack thermal resistance and mechanical properties; thus, their use is limited except for low-quality packaging purposes. Polypropylene, nylon, and polyethylene terephthalate have relatively stable molecular structures and good mechanical properties. However, when they are used for packaging purposes and then landfilled without special treatment, they are hardly decomposed due to their chemical and biological stability and accumulate in the ground, thereby shortening the lifespan of the landfill and causing the problem of soil contamination.

To make up for the shortcomings of these non-degradable plastic films, polylactic acid films, which are aliphatic polyesters with high biodegradability of the resin itself, have been widely used in recent years. Although these films have good mechanical properties, their use is limited for the lack of flexibility due to the unique crystal structure.

To improve this problem, Japanese Laid-open Patent Publication No. 2006-272712 discloses a method of preparing a film using a biodegradable aliphatic polyester alone other than polylactic acid. In such a case, not only is the glass transition temperature so low that it is not easy to prepare a film using a biaxial stretching method, but also the mechanical strength of a final film is low and the heat shrinkage rate is high, causing many problems during the processing thereof.

In addition, Japanese Laid-open Patent Publication No. 2003-160202 discloses a method of blending polylactic acid with an aliphatic-aromatic copolyester to impart flexibility and heat-sealing properties to a film. However, there is a problem in this method in that the transparency of a final film is significantly reduced, and its oxygen permeability is high, due to the low compatibility between polylactic acid and the aliphatic-aromatic copolyester and the use of a plasticizer, making it difficult to be used in packaging applications that require transparency and a low oxygen permeability.

[Prior Art Document]

[Patent Document]

(Patent Document 1) Japanese Laid-open Patent Publication No. 2006-272712
(Patent Document 2) Japanese Laid-open Patent Publication No. 2003-160202

### Detailed Description of the Invention

### Technical Problem

An object of the present invention is to solve the problems of the prior art described above.

Another object of the present invention is to provide a multilayer biodegradable barrier film, in which transparency is secured and oxygen permeability is improved, by alternately laminating two or more different types of resin layers comprising a first resin layer comprising an aliphatic polyester-based polymer and a second resin layer comprising a polyvinyl alcohol (PVA).

Another object of the present invention is to provide a high-quality, environmentally friendly packaging material that is biodegradable and environmentally friendly, in which transparency is secured and oxygen permeability is improved, by using the multilayer biodegradable barrier film.

### Solution to the Problem

The present invention provides a multilayer biodegradable barrier film that comprises two or more different types of resin layers alternately laminated, wherein the resin layers comprise a first resin layer comprising an aliphatic polyester-based polymer; and a second resin layer comprising a polyvinyl alcohol (PVA).

In addition, the present invention provides a process for preparing a multilayer biodegradable barrier film that comprises preparing a first resin comprising an aliphatic polyester-based polymer; and a second resin comprising a polyvinyl alcohol (PVA), respectively (step 1); melt-extruding the first resin and the second resin, respectively, and alternately laminating a first resin layer and a second resin layer to obtain a sheet in which two or more different types of resin layers are alternately laminated (step 2); and biaxially stretching and heat-setting the laminated sheet to obtain a multilayer biodegradable barrier film (step 3).

In addition, the present invention provides an environmentally friendly packaging material that comprises a multilayer biodegradable barrier film, wherein the multilayer biodegradable barrier film comprises two or more different types of resin layers alternately laminated, and the resin layers comprise a first resin layer comprising an aliphatic polyester-based polymer; and a second resin layer comprising a polyvinyl alcohol (PVA).

**Advantageous Effects of the Invention**

The multilayer biodegradable barrier film according to an embodiment is characterized in that as it comprises two or more different types of resin layers alternately laminated, wherein the resin layers comprise a first resin layer comprising an aliphatic polyester-based polymer; and a second resin layer comprising a polyvinyl alcohol (PVA), it is possible to achieve excellent transparency and barrier properties to oxygen at the same time.

In addition, the process for preparing a multilayer biodegradable barrier film according to an embodiment can further enhance moldability, processability, and productivity in an economical and efficient way.

Further, the multilayer biodegradable barrier film is biodegradable, along with the above characteristics, and has environmentally friendly features as it completely decomposes when landfilled; thus, it can be used in various fields as a packaging material to provide a high-quality, environmentally friendly packaging material.

**Brief Description of the Drawing**

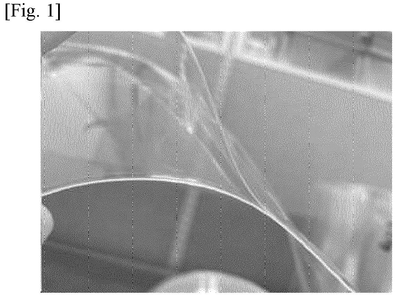

Fig. 1 is a photograph showing the result of an interfacial delamination test of the film according to Test Example 5.

**Best Mode for Carrying out the Invention**

Hereinafter, the present invention will be described in more detail.

The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In the present specification, a singular expression is understood to encompass a singular or plural expression, interpreted in context, unless otherwise specified.

In addition, all numbers expressing the physical properties, dimensions, reaction conditions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

In the present specification, in the case where an element is mentioned to be formed "on a side" or "on another side," or "on" or "under" another element, it means not only that one element is directly formed "on a side" or "on another side," or "on" or "under" another element, but also that one element is indirectly formed on or under another element with other element(s) interposed between them.

Multilayer biodegradable barrier film

As the multilayer biodegradable barrier film according to an embodiment comprises two or more different types of resin layers alternately laminated, wherein the resin layers comprise a first resin layer comprising an aliphatic polyester-based polymer; and a second resin layer comprising a polyvinyl alcohol (PVA), it is possible to achieve excellent transparency while improving barrier properties to oxygen at the same time.

In the multilayer biodegradable barrier film according to an embodiment, two or more different types of resin layers are alternately laminated, wherein the resin layers comprise a first resin layer comprising an aliphatic polyester-based polymer; and a second resin layer comprising a polyvinyl alcohol.

Hereinafter, each layer of the multilayer biodegradable barrier film will be described in detail.

First resin layer

The first resin layer may comprise an aliphatic polyester-based polymer as a main component.

In the present specification, the "main component" means that the proportion of a specific component among the entire components is 50% by weight or more, 70% by weight or more, 80% by weight or more, 90% by weight or more, 95% by weight or more, or 98% by weight or more, and 100% by weight or less, 98% by weight or less, 95% by weight or less, or 90% by weight or less.

For example, the first resin layer may comprise an aliphatic polyester-based polymer in an amount of 95% by weight to 100% by weight.

The aliphatic polyester-based polymer comprises at least one selected from the group consisting of polylactic acid, polycaprolactone, polyhydroxyalkanoate, polyglycolic acid, polybutylene succinate, polybutylene adipate, and each copolymer thereof.

In an embodiment, the first resin layer may comprise a polylactic acid-based polymer as a main component. Specifically, the first resin layer may comprise a polylactic acid-based polymer in an amount of 50% by weight or more, 70% by weight or more, 80% by weight or more, 90% by weight or more, 95% by weight or more, or 98% by weight or more, based on the total weight of the first resin layer, but it is not limited thereto.

Since the polylactic acid-based polymer, unlike petroleum-based resins, is based on biomass, recycled resources can be used. It emits less carbon dioxide, the main cause of global warming, during its production as compared with conventional resins and is environmentally friendly as it is biodegraded by moisture and microorganisms when landfilled.

The polylactic acid-based polymer may have a weight average molecular weight (Mw) of 100,000 to 1,000,000 g/mole, 100,000 to 800,000 g/mole, 100,000 to 500,000 g/mole, or 100,000 to 300,000 g/mole. The weight average molecular weight (Mw) may be measured by gel permeation chromatography (GPC). When the weight average molecular weight (Mw) of the polylactic acid-based polymer satisfies the above range, the mechanical and optical properties of the multilayer biodegradable barrier film can be further enhanced.

The polylactic acid-based polymer may comprise L-lactic acid, D-lactic acid, D,L-lactic acid, or a combination thereof. Specifically, the polylactic acid-based polymer may be a random copolymer of L-lactic acid and D-lactic acid.

Here, the content of D-lactic acid may be 1% by weight to 5% by weight, 1% by weight to 4% by weight, 2% by weight to 4% by weight, 1% by weight to 3% by weight, 2% by weight to 3% by weight, or 1% by weight to 2% by weight, based on the total weight of the polylactic acid-based polymer. If the content of D-lactic acid satisfies the above range, processability may be enhanced in film stretching.

In addition, the content of L-lactic acid may be 80% by weight to 99% by weight, 83% by weight to 99% by weight, 85% by weight to 99% by weight, or 90% by weight to 99% by weight, based on the total weight of the polylactic acid-based polymer. If the content of L-lactic acid satisfies the above range, the thermal resistance properties of a film can be enhanced.

The polylactic acid-based resin may have a melting temperature (Tm) of 50°C to 300°C, 100°C to 250°C, 110°C to 220°C, or 120°C to 200°C.

The polylactic acid-based resin may have a glass transition temperature (Tg) of 30°C to 100°C, 30°C to 80°C, 40°C to 80°C, 40°C to 70°C, or 45°C to 65°C.

The polylactic acid-based resin may have a melt viscosity ($V_{PLA}$) at 210°C of 5,000 poise to 15,000 poise, 5,000 poise to 12,000 poise, 7,000 poise to 12,000 poise, 7,500 poise to 11,000 poise, or 8,000 poise to 10,000 poise. Here, the melt viscosity is measured at 210°C and a shear rate of 100 s$^{-1}$ using a rheometer.

In an embodiment, the first resin layer may comprise an aliphatic polyester-based polymer alone, or the aliphatic polyester-based polymer may be copolymerized with a small amount of other hydroxy carboxylic acid units and employed as a resin for the first resin layer, or the aliphatic polyester-based polymer may be mixed with a small amount of a vinyl acetate or vinyl laurate copolymer and employed as a resin for the first resin layer, or the aliphatic polyester-based polymer may be mixed with butyl acrylate-based rubber of a core-shell structure and employed as a resin for the first resin layer.

Meanwhile, the first resin layer may further comprise at least one additive selected from the group consisting of electrostatic agents, antistatic agents, antioxidants, thermal stabilizers, ultraviolet ray blockers, anti-blocking agents, and other inorganic lubricants. Here, such additives may appropriately be used within a range that does not impair the effect of the invention according to the embodiment.

Second resin layer

The second resin layer may comprise a polyvinyl alcohol as a main component.

For example, the second resin layer may comprise a polyvinyl alcohol in an amount of 95% by weight to 100% by weight.

The polyvinyl alcohol is a biodegradable resin certified as biodegradable according to the ISO 14851 or ISO 14855 standard, specifically, a biodegradable resin certified as biodegradable according to the ISO 14851 standard. Thus, if the multilayer biodegradable barrier film comprises the polyvinyl alcohol as the second resin layer, it is advantageous in terms of environmental friendliness since it can be naturally decomposed by microorganisms, and it has excellent compatibility with the aliphatic polyester-based resin employed in the first resin layer, whereby the desired effect can be readily achieved.

If the second resin layer comprises an aliphatic polyester-based resin or an aliphatic-aromatic copolymerized polyester-based resin (e.g., polybutylene adipate terephthalate (PBAT) resin), other than the polyvinyl alcohol, as a main component, not only may the optical properties such as haze be relatively high, but the oxygen permeability is also very high, whereby the effect as a barrier film cannot be achieved. That is, there may be limitations in the use of packaging for a substance prone to oxygen.

The polyvinyl alcohol may comprise a modified polyvinyl alcohol, an unmodified polyvinyl alcohol, or a combination thereof.

The polyvinyl alcohol may comprise an unmodified polyvinyl alcohol in an amount of 10 to 50% by weight or 20 to 40% by weight based on the total weight of the polyvinyl alcohol.

The modified polyvinyl alcohol may be a modified vinyl alcohol substituted with at least one organic functional group selected from the group consisting of a carboxyl group, a nitrile group, an acetate group, an ester group, an isocyanate group, a silyl group, a sulfonic acid group, a methyrol group, and an acetacetyl group.

Here, the modified vinyl alcohol substituted with the organic functional group may have a substitution rate of 10% to 80%, 15% to 70%, 20% to 60%, or 20% to 50%.

The polyvinyl alcohol is a saponified product of a polyvinyl acetate.

The degree of saponification of the polyvinyl alcohol may be 30% or more.

Specifically, the degree of saponification of the polyvinyl alcohol may be 40% or more, 50% or more, 60% or more, 70% or more, 80% or more, 90% or more, or 95% or more, but it is not limited thereto.

The degree of saponification may be measured by the method of JIS K 6726.

Specifically, if the degree of saponification is 97% by mole or more, it may be measured by the following saponification degree measurement method A. If the degree of saponification is less than 97% by mole, it may be measured by the following saponification degree measurement method B.

$$<\text{Calculation equation}>$$

$$A\ (\%) = [0.60 \times (a - b) \times F \times 100]/(S \times P)$$

$$B\ (\%) = (44.05 \times A)/(60.5 - 0.42 \times A)$$

$$C\ (\%) = 100 - B$$

$$P = 100 - [R + N + (K - N \times 0.378)]$$

A: weight of residual acetic acid groups (%)
B: mole of residual acetic acid groups (%)
C: mole of saponification degree (%)
S: weight of an original sample (g)
P: purity (%)
F: concentration coefficient of a 0.1 N NaOH solution
R: volatile content (%)
N: sodium acetate (%)
K: ash content (%)

<Saponification degree measurement method A>

A 300-ml Erlenmeyer flask is charged with 3 g of an original sample and 100 ml of water, which is dissolved by heating (95°C to 98°C) and cooled. Then, 25 ml of a 0.1 N NaOH solution is added, and it is left at room temperature for 2 hours or longer.

Next, 25 ml of a 0.1 N $H_2SO_4$ solution is added, and the excess sulfuric acid is titrated with a 0.1 N NaOH solution until a light red color appears using phenolphthalein as an indicator. The titrated amount is set to "a" ml.

Separately, a blank test is conducted in the same manner as the main test, and the degree of saponification is calculated from Equation 1 above, taking the titration amount of the 0.1 N NaOH solution used in the blank test as "b" ml.

<Saponification degree measurement method B>

A 300-ml Erlenmeyer flask is charged with 0.5 g of an original sample and 100 ml of water, which is dissolved by heating (95°C to 98°C) and cooled. Then, 25 ml of a 0.2 N NaOH solution is added, and it is left at room temperature for 2 hours or longer.

Next, 25 ml of a 0.2 N $H_2SO_4$ solution is added, and the excess sulfuric acid is titrated with a 0.1 N NaOH solution until a light red color appears using phenolphthalein as an indicator. The titrated amount is set to "a" ml.

Separately, a blank test is conducted in the same manner as the main test, and the degree of saponification is calculated from Equation 1 above, taking the titration amount of the 0.1 N NaOH solution used in the blank test as "b" ml.

When the degree of saponification of a polyvinyl alcohol measured by the above method is within the above range, a film with excellent barrier properties to oxygen can be achieved.

In addition, the polyvinyl alcohol may have a number average degree of polymerization of 300 to 5,000.

The polyvinyl alcohol may have a weight average molecular weight (Mw) of 3,000 to 100,000 g/mole, 3,000 to 80,000 g/mole, 8,000 to 50,000 g/mole, or 10,000 to 40,000 g/mole. The weight average molecular weight (Mw) may be measured by gel permeation chromatography (GPC). When the weight average molecular weight (Mw) of the polyvinyl alcohol satisfies the above range, the compatibility with the first resin layer comprising an aliphatic polyester-based polymer as a main component and processability can be more excellent, and transparency and barrier properties to oxygen can be further enhanced while appropriate strength of the film according to an embodiment is maintained.

The polyvinyl alcohol may have a melting temperature (Tm) of 120°C to 220°C, 140°C to 200°C, or 150°C to 190°C.

The polyvinyl alcohol may have a glass transition temperature (Tg) of 40°C to 90°C or 50°C to 80°C.

The polyvinyl alcohol may have a melt viscosity ($V_{PVA}$) at 210°C of 3,000 poise to 20,000 poise, 6,000 poise to 18,000 poise, 8,000 poise to 18,000 poise, 6,000 poise to 15,000 poise, or 8,000 poise to 15,000 poise.

The polyvinyl alcohol may have a density measured by ASTM D792 of 1.0 g/cm$^3$ to 1.5 g/cm$^3$, 1.05 g/cm$^3$ to 1.5 g/cm$^3$, 1.05 g/cm$^3$ to 1.3 g/cm$^3$, or 1.05 g/cm$^3$ to 1.25 g/cm$^3$.

The polyvinyl alcohol may have a melt index (MI) (210°C and 2.16 kg condition) measured by ASTM D1238 of 0.05 g/10 minutes to 50 g/10 minutes, 0.5 g/10 minutes to 50 g/10 minutes, 1 minutes to 50 g/10 minutes, 1 minutes to 40 g/10 minutes, or 2 g/10 minutes to 40 g/10 minutes.

Meanwhile, the second resin layer may further comprise at least one additive selected from the group consisting of electrostatic agents, antistatic agents, antioxidants, thermal stabilizers, ultraviolet ray blockers, anti-blocking agents, and other inorganic lubricants. Here, such additives may appropriately be used within a range that does not impair the effect of the invention according to the embodiment.

Third resin layer

According to an embodiment, a third resin layer, which comprises a resin different from those used in the first resin layer and the second resin layer as a main component, may be alternately laminated with the first resin layer and the second resin layer within a range that does not impair the effect of the present invention.

The resin that may be used in the third resin layer may be an aliphatic polyester-based resin, an aliphatic-aromatic copolyester-based resin, or a gas-impermeable resin.

For example, the aliphatic polyester-based resin or the aliphatic-aromatic copolyester-based resin may comprise at least one selected from the group consisting of a polybutylene adipate terephthalate (PBAT) resin, a polybutylene succinate (PBS) resin, a polybutylene adipate (PBA) resin, a polybutylene succinate-adipate (PBSA) resin, a polybutylene succinate-terephthalate (PBST) resin, a polyhydroxybutyrate-valerate (PHBV) resin, a polycaprolactone (PCL) resin, and a polybutylene succinate adipate terephthalate (PBSAT) resin.

In addition, the gas-impermeable resin may comprise at least one selected from the group consisting of an ethylene-vinyl alcohol copolymer (EVOH), a butenediol vinyl alcohol copolymer (BVOH), a polychlorotrifluoroethylene (PCTFE), an ethylene-chlorotrifluoroethylene copolymer (ECTFE), and a polyvinylidene fluoride (PVDF).

Likewise, the third resin layer may further comprise at least one additive selected from the group consisting of electrostatic agents, antistatic agents, antioxidants, thermal stabilizers, ultraviolet ray blockers, anti-blocking agents, and other inorganic lubricants. Here, such additives may appropriately be used within a range that does not impair the effect of the invention according to the embodiment.

Corona layer or coating layer

In order to increase the effect of the subsequent processing within the scope that does not impair the effect of the embodiment, at least one side of the surfaces of the film may be subjected to corona treatment to increase the processing suitability of the film, inorganic particle coating to prevent static electricity or blocking, or coating treatment to enhance printability with a print layer.

The multilayer biodegradable barrier film according to an embodiment may further comprise a corona layer disposed on one side, or the other side, of the first resin layer. Specifically, the corona layer may be directly formed on one side, or the other side, of the first resin layer.

As the multilayer biodegradable barrier film further comprises a corona layer, it is possible to remove contaminants such as oil from the surface of the multilayer biodegradable barrier film and create a surface that is compatible with an adhesive area, thereby increasing adhesive strength, and to chemically and physically modify the surface, thereby further enhancing hydrophilicity, adhesion, printability, coating properties, deposition properties, and the like.

The corona layer is formed by corona treatment of the first resin layer and may comprise a polar functional group selected from the group consisting of -CO, -COOH, and -OH.

The surface tension for the corona-treated side in the first resin layer may be 38 dyn/cm or more, for example, 38 to 70 dyn/cm, for example, 38 to 68 dyn/cm, or, for example, 38 to 66 dyn/cm. If the surface tension for the corona-treated side of the first resin layer satisfies the above range, it is possible to further enhance adhesion, printability, coating properties, deposition properties, and the like of the multilayer biodegradable barrier film.

The multilayer biodegradable barrier film according to another embodiment may further comprise a coating layer disposed on one side, or the other side, of the first resin layer.

The coating layer may comprise a primer coating layer. In such a case, performance such as antistatic properties, printability, and deposition strength can be enhanced.

The primer coating layer may be formed on one side, or the other side, of the first resin layer. Alternatively, if the multilayer biodegradable barrier film comprises the corona layer, the corona layer may be formed on one side, or the other side, of the first resin layer, and the primer coating layer may be formed on one side, or the other side, of the corona layer.

Specifically, a primer coating layer may be formed by subjecting one side, or the other side, of the first resin layer to primer treatment. Alternatively, a primer coating layer may be formed by subjecting one side, or the other side, of the corona layer disposed on one side, or the other side, of the first resin layer to primer treatment.

The primer coating layer may comprise at least one having antistatic performance selected from the group consisting of ammonium-based compounds, phosphoric acid-based compounds, and polymers such as acrylic resins and urethane-based resins.

The surface resistance of the primer coating layer may be 0.1 to 30 $\Omega/\square$, 0.2 to 28 $\Omega/\square$, 0.3 to 26 $\Omega/\square$, 0.4 to 24 $\Omega/\square$, or 1 to 20 $\Omega/\square$.

The surface resistance may be evaluated for antistatic performance using a surface resistance meter at, for example, room temperature (22 $\pm$ 2°C) and relative humidity (60% $\pm$ 10%).

The thickness of the coating layer may be appropriately adjusted depending on the use and purpose of the multilayer biodegradable barrier film and may specifically be 15 nm to 50 nm, 20 nm to 45 nm, 25 nm to 40 nm, or 30 nm to 35 nm, but it is not limited thereto.

Structural characteristics and physical properties of the multilayer biodegradable barrier film

In the multilayer biodegradable barrier film according to an embodiment, two or more different types of resin layers are alternately laminated, wherein the resin layers comprise a first resin layer comprising an aliphatic polyester-based polymer; and a second resin layer comprising a polyvinyl alcohol.

Specifically, in the multilayer biodegradable barrier film according to an embodiment, two or more different types of resin layers are alternately laminated, wherein the resin layers comprise a first resin layer comprising a polylactic acid-based polymer; and a second resin layer comprising a polyvinyl alcohol.

The total number of layers of the multilayer biodegradable barrier film may be adjusted in light of the thickness of the individual layers of the film, but it may be 7 layers or more. For example, it may be 9 layers or more, 10 layers or more, 11 layers or more, 15 layers or more, 20 layers or more, 25 layers or more, or 29 layers or more, and 1,000 layers or less, 800 layers or less, 500 layers or less, or 300 layers or less, 200 layers or less, 100 layers or less, or 70 layers or less.

That is, the multilayer biodegradable barrier film according to an embodiment may have a laminated structure of 7 layers or more. For example, the multilayer biodegradable barrier film according to an embodiment may have a laminated structure of 7 layers to 300 layers, 9 layers to 300 layers, 15 layers to 300 layers, 15 layers to 200 layers, or 15 layers to 100 layers, but it is not limited thereto.

Meanwhile, if the total number of layers of the multilayer biodegradable barrier film is less than the above range, the oxygen permeability may increase, whereby it may be inappropriate for use as a packaging material. In particular, interfacial delamination may take place between the layers, resulting in a high defect rate of a packaging material.

Specifically, as the multilayer biodegradable barrier film has a laminated structure having a total number of layers of the above range or more, the thickness of each layer becomes relatively thin. An interfacial tension is applied between the layers having thin thicknesses, and the force accumulates to make the attractive force between the molecules become very strong.

In addition, the multilayer biodegradable barrier film according to an embodiment may be a multilayer coextrusion film or a multilayer bonding film. Specifically, the multilayer biodegradable barrier film may be a multilayer coextrusion film.

If the multilayer biodegradable barrier film according to an embodiment has a structure in which only the first resin layer is employed, rather than the second resin layer is alternately laminated therewith, the oxygen permeability is significantly high, whereby it is difficult to expect a role as a packaging material that requires low oxygen permeability. If the first resin layer and the second resin layer are blended to be used, it would have not only high oxygen permeability but also a very high haze; thus, it is difficult to function as a packaging material that requires transparency.

The multilayer biodegradable barrier film may comprise a first resin layer as an outermost layer on both sides. Specifically, the outermost layers on both sides of the multilayer biodegradable barrier film are the first resin layers.

When the outermost layers of the multilayer biodegradable barrier film are first resin layers comprising an aliphatic polyester-based polymer, specifically a polylactic acid-based polymer, as a main component, it may be more advantageous for stretching and more advantageous in terms of moldability, processability, and productivity. If the outermost layers of the multilayer biodegradable barrier film are second resin layers comprising a polyvinyl alcohol as a main component, stretching may not be readily carried out, casting may not be readily carried out, and adhesion may easily occur, thereby reducing moldability, processability, and productivity.

According to an embodiment, the sum of the thicknesses of the outermost layers on both sides may be 5% or more, 10% or more, 15% or more, 20% or more, 25% or more, or 30% or more, and 70% or less, 60% or less, 50% or less, 45% or less, or 40% or less, of the total thickness of the film, but it is not limited thereto. For example, the sum of the thicknesses of the outermost layers on both sides may be 5 to 50%, 10 to 50%, 20 to 50%, or 30 to 40%, of the total thickness of the film, but it is not limited thereto.

If the sum of the thicknesses of the outermost layers on both sides satisfies the above range, it may be more advantageous for achieving the effects desired in the embodiment, more advantageous for stretching, and very advantageous in terms of moldability, processability, and productivity.

In addition, the resin layers in contact with the outermost layers on both sides may each be a second resin layer.

Meanwhile, in the multilayer biodegradable barrier film according to an embodiment, the average thickness ratio of individual layers of the first resin layers and the second resin layers, excluding the outermost layers on both sides, may be 1:0.5 to 2. The average thickness ratio of individual layers of the first resin layers and the second resin layers, excluding the outermost layers on both sides, may be, for example, 1: 0.5 to 1.5, for example, 1: 0.5 to 1.3, but it is not limited thereto. If the average thickness ratio of individual layers of the first resin layers and the second resin layers, excluding the outermost layers on both sides, satisfies the above range, it is possible to evenly enhance the physical properties, such as haze and oxygen permeability, of the multilayer biodegradable barrier film.

In the multilayer biodegradable barrier film, the average thickness of individual layers of the first resin layer, excluding the outermost layers on both sides, may be 10 nm or more, 50 nm or more, 100 nm or more, 150 nm or more, or 200 nm or more, and 1,000 nm or less, 800 nm or less, 700 nm or less, or 500 nm or less. For example, it may be 50 nm to 500 nm, but it is not limited thereto.

In the multilayer biodegradable barrier film, the total thickness of the first resin layers, excluding the outermost layers on both sides, may be 1 $\mu$m or more, 3 $\mu$m or more, 5 $\mu$m or more, 6 $\mu$m or more, or 7 $\mu$m or more, and 50 $\mu$m or less, 30 $\mu$m or less, 20 $\mu$m or less, or 10 $\mu$m or less. For example, it may be 1 $\mu$m to 20 $\mu$m or 5 $\mu$m to 15 $\mu$m, but it is not limited thereto.

In the multilayer biodegradable barrier film, the average thickness of individual layers of the second resin layer, excluding the outermost layers on both sides, may be 10 nm or more, 50 nm or more, 100 nm or more, 150 nm or more, or 200 nm or more, and 1,000 nm or less, 800 nm or less, 700 nm or less, or 500 nm or less. For example, it may be 50 nm to 500 nm, but it is not limited thereto.

In the multilayer biodegradable barrier film, the total thickness of the second resin layers, excluding the outermost layers on both sides, may be 1 $\mu$m or more, 3 $\mu$m or more, 5 $\mu$m or more, 6 $\mu$m or more, or 7 $\mu$m or more, and 50 $\mu$m or less, 30 $\mu$m or less, 20 $\mu$m or less, or 10 $\mu$m or less. For example, it may be 1 $\mu$m to 20 $\mu$m or 5 $\mu$m to 15 $\mu$m, but it is not limited thereto.

The total thickness of the multilayer biodegradable barrier film, including the outermost layers on both sides, may be 5 $\mu$m or more, 7 $\mu$m or more, 10 $\mu$m or more, 15 $\mu$m or more, or 20 $\mu$m or more, and 100 $\mu$m or less, 80 $\mu$m or less, 70 $\mu$m or less, or 50 $\mu$m or less, but it is not limited thereto. For example, it may be 10 $\mu$m to 50 $\mu$m or 15 $\mu$m to 30 $\mu$m, but it is not limited thereto.

If the ranges related to the thicknesses of the layers and film satisfy the above ranges, it is more advantageous for achieving the effect desired in the embodiment. In particular, the appearance properties and mechanical properties of the film can be enhanced. In addition, it may be easy to make a desired shape by folding or crumpling a food packaging film for packaging food.

The multilayer biodegradable barrier film according to an embodiment is characterized by having a high level of oxygen barrier properties and transparency at the same time.

The multilayer biodegradable barrier film according to an embodiment may have an oxygen permeability of 300 cc/m$^2$·atm·day or less, 100 cc/m$^2$·atm·day or less, 50 cc/m$^2$·atm·day or less, 30 cc/m$^2$·atm·day or less, 20 cc/m$^2$·atm·day or less, 15 cc/m$^2$·atm·day or less, 10 cc/m$^2$·atm·day, or 8 cc/m$^2$·atm·day or less.

The oxygen permeability is measured at room temperature (23 ± 2°C) with a permeation area of 50 cm$^2$ using an oxygen permeability measurement device of OX-TRAN 2/21 MD of Mocon according to the ASTM D3895 standard.

If the oxygen permeability of the film exceeds the above range, the barrier properties to oxygen may be insufficient, and its use may be limited.

In addition, the multilayer biodegradable barrier film may have a haze of 20% or less, 10% or less, 8% or less, 7% or less, 6% or less, or 5% or less.

The haze is measured using a hazemeter (model name: SEP-H) from Nihon Semitsu Kogaku.

If the haze exceeds the above range, its use may be limited due to a lack of transparency.

The multilayer biodegradable barrier film may have a light transmittance of 85% to 99%, 85% to 96%, 88% to 95%, or 90% to 94%, when measured at a wavelength of 550 nm.

When the multilayer biodegradable barrier film is crumpled by hand with force for a certain period of time, interfacial delamination does not take place between the first resin layer and the second resin layer.

Further, the multilayer biodegradable barrier film may have a biodegradability of 60% or more, preferably 80% or more, more preferably 90% or more, due to the nature of the product intended to reduce environmental load.

The multilayer biodegradable barrier film according to an embodiment satisfies a high level of oxygen barrier properties, transparency, and biodegradability at the same time; thus, it can be used in various fields as a packaging material, making it more advantageous to provide a high-quality, environmentally friendly packaging material.

Process for preparing a multilayer biodegradable barrier film

The process for preparing a multilayer biodegradable barrier film according to an embodiment can further enhance moldability, processability, and productivity in an economical and efficient way.

The process for preparing a multilayer biodegradable barrier film according to an embodiment comprises preparing a first resin comprising an aliphatic polyester-based polymer; and a second resin comprising a polyvinyl alcohol, respectively (step 1); melt-extruding the first resin and the second resin, respectively, and alternately laminating a first resin layer and a second resin layer to obtain a sheet in which two or more different types of resin layers are alternately laminated (step 2); and biaxially stretching and heat-setting the laminated sheet to obtain a multilayer biodegradable barrier film (step 3).

First, the process for preparing a multilayer biodegradable barrier film may comprise preparing a first resin comprising an aliphatic polyester-based polymer; and a second resin comprising a polyvinyl alcohol, respectively (step 1).

Description on the first resin and the second resin is as described above.

Specifically, the melt viscosity of the first resin layer is 5,000 to 15,000 poises at 210°C, and the melt viscosity of the second resin layer is 8,000 to 18,000 poises at 210°C.

In addition, in a multilayer structure having seven layers or more in which the first resin layer forms the outermost layers as in the embodiment, the melt viscosity of the second resin may be the same as, or different from, the melt viscosity of the first resin. Specifically, it is preferable that the difference between the melt viscosity of the first resin and the melt viscosity of the second resin is small.

In addition, the process for preparing a multilayer biodegradable barrier film may comprise melt-extruding the first resin and the second resin, respectively, and alternately laminating a first resin layer and a second resin layer to obtain a sheet in which two or more different types of resin layers are alternately laminated (step 2).

The melt extrusion temperature of the first resin may be 180°C to 220°C, 190°C to 220°C, or 200°C to 220°C. The melt extrusion temperature of the second resin may be 200°C to 230°C, 200°C to 220°C, or 205°C to 220°C.

The melt extrusion temperature of the first resin and the melt extrusion temperature of the second resin may be the same or different. The difference between the melt extrusion temperature of the first resin and the melt extrusion temperature of the second resin may be, for example, 30°C or less, less than 30°C, 20°C or less, 15°C or less, 10°C or less, or 5°C or less, but it is not limited thereto.

When the melt extrusion temperatures of the first resin and the second resin each satisfy the above range, processability, productivity, and moldability can be improved.

According to an embodiment, the melt extrusion temperatures of the first resin and the second resin are appropriately controlled to obtain a first resin layer and a second resin layer, and they are alternately laminated to obtain a sheet in which two or more different types of resin layers are alternately laminated, whereby the desired level of oxygen barrier properties and transparency can be achieved without interlayer delamination in the final film.

Specifically, the first resin and the second resin obtained in step 1 may be melt-extruded, respectively, using two extruders and a multilayer feed block in which two layers are alternately laminated. In addition, the first resin layer and the second resin layer are divided within the multilayer feed block, the divided first resin layer and the second resin layer are alternately laminated and passed through a die, and they are brought into contact with a cooling roll cooled to 10°C to 40°C to obtain an unstretched multilayer biodegradable sheet. In such an event, the lamination may be carried out such that the first resin layer is positioned in the outermost layer. Description on the outermost layer is as described above.

Meanwhile, according to an embodiment, a step of drying the first resin and the second resin before the melt extrusion may be further carried out. The drying step may be carried out, for example, at 60°C to 120°C, 70°C to 100°C, or 80°C to 90°C, for 4 hours to 24 hours. In such an event, the drying conditions of each of the first resin and the second resin may be the same or different.

Further, the process for preparing a multilayer biodegradable barrier film may comprise biaxially stretching and heat setting the laminated sheet to obtain a multilayer biodegradable barrier film (step 3).

Specifically, the laminated sheet may be biaxially stretched. The biaxial stretching step may comprise, for example, preheating to 50°C to 80°C, followed by longitudinal stretching of 2 to 4 times in the longitudinal direction (MD) at 40°C to 100°C and transverse stretching of 3 to 6 times in the transverse direction (TD) at 50°C to 150°C.

As the laminated sheet is biaxially stretched in both directions, the physical properties and moldability of the multilayer biodegradable barrier film can be further enhanced; thus, a high-quality packaging material can be achieved.

If uniaxial stretching is performed in only one of the longitudinal and transverse directions, the thickness deviation of the multilayer biodegradable barrier film is severe, and the mechanical properties and thermal properties in the direction in which stretching is not performed may deteriorate.

In addition, the heat-setting step may be carried out at 50°C to 150°C, 70°C to 150°C, 100°C to 150°C, or 110°C to 140°C.

In the process for preparing a multilayer biodegradable barrier film, a corona layer, a coating layer, or both may be further formed on one side, or the other side, of the first resin layer.

Specifically, a corona layer may be formed by subjecting the first resin layer to corona treatment.

When high-frequency and high-voltage output is applied between a discharge electrode and a treatment roll, corona discharge takes place. Here, corona treatment can be carried out by passing the desired surface through it.

Specifically, the corona discharge intensity may be, for example, 3 to 20 kW. If the corona discharge intensity is less than the above range, the corona discharge treatment effect may be minimal. On the other hand, if the corona discharge intensity exceeds the above range, excessive surface modification may cause surface damage.

The configuration and physical properties of the corona layer are as described above.

In addition, a coating layer may be formed on one side, or the other side, of the first resin layer.

The coating layer may comprise a primer coating layer. The primer coating layer may be formed by subjecting one side, or the other side, of the first resin layer to primer treatment with a primer composition comprising at least one selected from the group consisting of ammonium-based compounds, phosphoric acid-based compounds, and polymers such as acrylic resins and urethane-based resins, which forms surface roughness to further enhance adhesion properties.

The primer coating layer may be formed on one side, or the other side, of the first resin layer. Alternatively, if the multilayer biodegradable barrier film comprises the corona layer, the corona layer may be formed on one side, or the other side, of the first resin layer, and the primer coating layer may be formed on one side, or the other side, of the corona layer.

In addition, the primer composition may contain a curing agent component. More specific examples thereof include 4,4'-diaminodiphenylmethane (DDM), aromatic diamines, and mixtures thereof. The amount of the curing agent component added may be 0.1 to 50% by weight based on the total weight of the primer composition.

The primer treatment method may be a conventional method used in the art, for example, spraying, brushing, rolling, and the like. Specifically, the primer composition may be sprayed using an airless spray onto the surface of the first resin layer under the conditions of an induction time of 1 to 30 minutes, a spray pressure of 5 to 500 MPa, a nozzle diameter of 0.46 to 0.58 mm, and a spray angle of 40 to 80°.

In addition, in order to increase the adhesion of the multilayer biodegradable barrier film, surface treatment such as plasma treatment, ultraviolet irradiation treatment, flame treatment, or saponification treatment may be appropriately carried out.

When the multilayer biodegradable barrier film is prepared according to the preparation process of the embodiment, it is economical and efficient, and can be more effective in preparing a multilayer biodegradable film having the desired configuration and physical properties.

When the multilayer biodegradable barrier film is prepared according to the preparation process as described above, it is economical and efficient and can be more effective in preparing a multilayer biodegradable barrier film having the desired configuration and physical properties.

In addition, description on the multilayer biodegradable barrier film is as described above.

Environmentally friendly packaging material

The environmentally friendly packaging material according to an embodiment has the characteristics of the multilayer biodegradable barrier film and has environmentally friendly features as it completely decomposes when landfilled since it is biodegradable; thus, it can be used in various fields as a packaging material with high quality.

Specifically, the environmentally friendly packaging material comprises a multilayer biodegradable barrier film, wherein the multilayer biodegradable barrier film comprises two or more different types of resin layers alternately laminated, and the resin layers comprise a first resin layer comprising an aliphatic polyester-based polymer; and a second resin layer comprising a polyvinyl alcohol.

Description on the multilayer biodegradable barrier film is as described above.

The environmentally friendly packaging material may be in the form of a film that can be used as general disposable films and food packaging materials, in the form of a fiber that can be used as fabrics, knitted fabrics, nonwoven fabrics, ropes, or in the form of a container that can be used as a container for food packaging such as a lunch box.

As the environmentally friendly packaging material comprises a multilayer biodegradable barrier film with a high level of oxygen barrier properties and transparency at the same time without interlayer interfacial delamination, it can provide excellent physical properties and quality. In addition, a packaging material, which is biodegradable and has environmentally friendly features as it completely decomposes when landfilled, can be provided; thus, it can be used in various fields as a packaging material to exhibit excellent characteristics.

When the environmentally friendly packaging material is used, it is possible to preserve the good appearance of the packaged product without deterioration as much as possible over a long period of time. In particular, when the environmentally friendly packaging material is used for food packaging, it may be advantageous in expanding the shelf life of the food.

**Embodiments for Carrying Out the Invention**

Hereinafter, the present invention will be described in detail with reference to Examples. But the following examples are intended to illustrate the present invention, and the scope of the present invention is not limited thereto only.

**<Example>**

**Test Example 1: Preparation of a multilayer biodegradable film**

A polylactic acid resin (Nature Works LLC, 4032D) with a D-lactide content of about 1.4% weight and a melt viscosity of about 8,770 poise at about 210°C was used as a resin for a first resin layer; and a polyvinyl alcohol resin having a melt viscosity of about 10,000 poise at 210°C and a saponification degree of 99% and certified under ISO 14851 was used as a resin for a second resin layer.

The resin for a first resin layer was dried at about 80°C for 6 hours using a dehumidifying dryer, and the resin for a second resin layer was dried at about 80°C for 2 hours using a dehumidifying dryer, to remove moisture. Using two extruders and a multilayer feed block in which two layers are alternately laminated, the resin for a first resin layer and the resin for a second resin layer were each melt-extruded with an extruder at a temperature of 210°C.

Within the multilayer feed block, the first resin layer was divided into 15 layers, and the second resin layer was divided into 14 layers. The divided first resin layers and the second resin layers were passed through a die of 780 mm to be alternately laminated, and they were brought into contact with a cooling roll cooled to about 21°C to obtain an unstretched multilayer biodegradable sheet having 29 layers. In such an event, the first resin layer was placed on the outermost layers on both sides, and the sum of the thicknesses of the outermost layers on both sides was 30% of the total thickness.

The unstretched multilayer biodegradable sheet thus obtained was stretched 3.0 times in the longitudinal direction at about 65°C and 3.9 times in the transverse direction at 120°C, heat set at 120°C, and given a relaxation rate of 1% to prepare a biodegradable multilayer film having 29 layers and a total thickness of 20 $\mu$m.

**Test Examples 2 to 5: Preparation of a multilayer biodegradable film**

Each multilayer biodegradable film was prepared in the same manner as in Test Example 1, except that the respective number of the first resin layers and the second resin layers, the sum of the thicknesses of the outermost layers on both sides, and the saponification degree of the polyvinyl alcohol resin were changed as shown in Table 1, respectively.

**Test Example 6: Preparation of a single-layer biodegradable film**

As shown in Table 1, a single-layer film was prepared using the resin for a first resin layer used in Test Example 1. Specifically, a single-layer biodegradable film was prepared in the same manner as in Test Example 1, except that the resin for a first resin layer was dried in a dehumidifying dryer at about 60°C for 8 hours and that the stretching in the transverse direction was carried out at 3.8 times.

**Test Example 7: Preparation of a single-layer biodegradable film**

As shown in Table 1, the resin for a first resin layer and the resin for a second resin layer used in Test Example 1 were hand-mixed at a weight ratio of 70:30 and then blended in a 45-phi twin-screw extruder at 210°C. A single-layer biodegradable film was prepared in the same manner as in Test Example 1, except that it was dried in a dehumidifying dryer at about 60°C for 8 hours and that the stretching in the transverse direction was carried out at 3.8 times.

**Test Example 8: Preparation of a multilayer biodegradable film**

As shown in Table 1, a multilayer biodegradable film was prepared in the same manner as in Test Example 1, except that a polybutylene adipate terephthalate (PBAT) resin, which is an aliphatic-aromatic copolyester resin with a melt viscosity of about 6,300 poise at 210°C and an aliphatic component content of about 50% by mole among the acid components, was used as the resin for second resin layer.

**<Evaluation Example>**

The single-layer and multilayer biodegradable films prepared according to Test Examples 1 to 8 were each measured for physical properties in the following manner. The results are shown in Table 1 below.

**Evaluation Example 1: Haze**

The haze was measured according to the ASTM D1003 standard using a hazemeter (model name: SEP-H) from Nihon Semitsu Kogaku.

**Evaluation Example 2: Oxygen permeability**

The oxygen permeability is measured at room temperature (23 $\pm$ 2°C) with a permeation area of 50 cm$^2$ using an oxygen permeability measurement device of OX-TRAN 2/21 MD of Mocon according to the ASTM D3895 standard.

**Evaluation Example 3: Interfacial delamination of the film**

Each of the multilayer films (Test Examples 1 to 5) was crumpled by hand with force for a certain period of time, and interlayer delamination between the first resin layer and the second resin layer was determined. When interfacial delamination between the layers did not occur, it was evaluated as ✕. When delamination was observed with the naked eye, it was evaluated as ∘.

Here, a picture of Test Example 5, in which interlayer delamination was observed with the naked eye, is shown in Fig. 1.

[Table 1]

| | | | T. Ex. 1 | T. Ex. 2 | T. Ex. 3 | T. Ex. 4 | T. Ex. 5 | T. Ex. 6 | T. Ex. 7 | T. Ex. 8 |
|---|---|---|---|---|---|---|---|---|---|---|
| | | | PLA/ PVA | PLA/ PVA | PLA/ PVA | PLA/ PVA | PLA/ PVA | PLA single layer | PLA/ PVA blended single layer | PLA/ PBAT |
| First resin | Comp. | | PLA | PLA | PLA | PLA | PLA | PLA 100% | PLA 70% | PLA |
| | No. of layers | | 15 | 22 | 29 | 29 | 3 | - | - | 15 |
| | Sum of thicknesses of outermost layers (%) | | 30 | 32 | 40 | 40 | 60 | - | - | 30 |
| | Extrusion temp. (°C) | | 210 | 210 | 210 | 210 | 210 | 210 | 210 | 210 |
| Second resin | Comp. | | PVA | PVA | PVA | PVA | PVA | - | PVA 30% | PBAT |
| | Saponification degree (%) | | 99 | 99 | 99 | 80 | 99 | - | 99 | - |
| | No. of layers | | 14 | 21 | 28 | 28 | 2 | - | - | 14 |
| | Extrusion temp. (°C) | | 210 | 210 | 210 | 210 | 210 | - | 210 | 210 |
| Total No. of layers | | | 29 | 43 | 57 | 57 | 5 | 1 | 1 | 29 |
| Film thickness ($\mu$m) | | | 20 | 20 | 20 | 20 | 20 | 20 | 20 | 20 |
| Film properties | Haze (%) | | 3.2 | 2.8 | 3.3 | 3.3 | 3.1 | 1.5 | 25 | 3.5 |
| | Oxygen permeability (cc/ (m$^2$·atm·day)) | | 4 | 3.5 | 5.1 | 8.9 | - | 755 | 450 | 1,130 |
| | Interlayer delamination | | × | × | × | × | ○ | - | - | × |

As can be seen from Table 1 above, for the biodegradable films of Test Examples 1 to 4, the physical properties related to transparency and barrier properties to oxygen were all excellent, and the interfacial delamination of the film did not occur. Accordingly, the multilayer biodegradable films according to Test Examples 1 to 4 can be used environmentally friendly for various applications including packaging applications in which transparency and barrier properties to oxygen are required.

In contrast, in Test Example 5, even though the same resin components were used as in Test Examples 1 to 4, as it had a laminated structure of 5 layers, interfacial delamination occurred between the layers, resulting in physical damage. In Test Examples 6 to 8, the oxygen permeability was significantly increased. In particular, in Test Example 7, in which PLA and PVA were blended to prepare a single-layer film, the haze was also very high, making it difficult to be used as a packaging material that requires transparency.

## Claims

1.  A multilayer biodegradable barrier film, which comprises two or more different types of resin layers alternately laminated, wherein the resin layers comprise a first resin layer comprising an aliphatic polyester-based polymer; and a second resin layer comprising a polyvinyl alcohol (PVA).

2.  The multilayer biodegradable barrier film of claim 1, wherein the aliphatic polyester-based polymer comprises at least one selected from the group consisting of polylactic acid, polycaprolactone, polyhydroxyalkanoate, polyglycolic acid, polybutylene succinate, polybutylene adipate, and each copolymer thereof.

3. The multilayer biodegradable barrier film of claim 1, wherein the multilayer biodegradable barrier film has a laminated structure of 7 layers or more.

4. The multilayer biodegradable barrier film of claim 1, wherein the outermost layers on both sides of the multilayer biodegradable barrier film are the first resin layers, and the sum of the thicknesses of the outermost layers on both sides is 5 to 50% of the total thickness of the film.

5. The multilayer biodegradable barrier film of claim 1, wherein the degree of saponification of the polyvinyl alcohol is 30% or more.

6. The multilayer biodegradable barrier film of claim 1, wherein the oxygen permeability is 30 cc/m$^2$·atm·day or less.

7. The multilayer biodegradable barrier film of claim 1, wherein the haze is 10% or less.

8. A process for preparing a multilayer biodegradable barrier film, which comprises:

   preparing a first resin comprising an aliphatic polyester-based polymer; and a second resin comprising a polyvinyl alcohol, respectively (step 1);
   melt-extruding the first resin and the second resin, respectively, and alternately laminating a first resin layer and a second resin layer to obtain a sheet in which two or more different types of resin layers are alternately laminated (step 2); and
   biaxially stretching and heat-setting the laminated sheet to obtain a multilayer biodegradable barrier film (step 3).

9. The process for preparing a multilayer biodegradable barrier film of claim 8, wherein the melt viscosity of the first resin layer is 5,000 to 15,000 poises at 210°C, the melt viscosity of the second resin layer is 8,000 to 18,000 poises at 210°C, the melt extrusion temperature of the first resin layer is 180°C to 220°C, and the melt extrusion temperature of the second resin layer is 200°C to 230°C.

10. An environmentally friendly packaging material, which comprises a multilayer biodegradable barrier film, wherein the multilayer biodegradable barrier film comprises two or more different types of resin layers alternately laminated, and the resin layers comprise a first resin layer comprising an aliphatic polyester-based polymer; and a second resin layer comprising a polyvinyl alcohol.

[Fig. 1]

## INTERNATIONAL SEARCH REPORT

| International application No. |
| --- |
| **PCT/KR2022/016075** |

| A. CLASSIFICATION OF SUBJECT MATTER |
| --- |
| **B32B 27/36**(2006.01)i; **B32B 27/30**(2006.01)i; **B32B 37/15**(2006.01)i |
| According to International Patent Classification (IPC) or to both national classification and IPC |

| B. FIELDS SEARCHED |
| --- |
| Minimum documentation searched (classification system followed by classification symbols) |
| B32B 27/36(2006.01); A61K 8/02(2006.01); A61K 9/70(2006.01); A61L 15/24(2006.01); B32B 27/00(2006.01); B32B 27/08(2006.01); B32B 5/02(2006.01); B32B 7/12(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 다층(multilayer), 폴리락트산(polylactic acid), 폴리비닐알코올(polyvinyl alcohol), 필름(film) |

| C. DOCUMENTS CONSIDERED TO BE RELEVANT |

| Category* | Citation of document, with indication, where appropriate, of the relevant passages | Relevant to claim No. |
| --- | --- | --- |
| X | JP 2015-039870 A (TEIJIN LTD.) 02 March 2015 (2015-03-02)<br>    See claims 1-10; paragraphs [0020] and [0045]; and example 1. | 1-10 |
| A | KR 10-2015-0131062 A (TORAY INDUSTRIES, INC. et al.) 24 November 2015 (2015-11-24)<br>    See entire document. | 1-10 |
| A | KR 10-2012-0016416 A (SKC CO., LTD.) 24 February 2012 (2012-02-24)<br>    See entire document. | 1-10 |
| A | KR 10-2018-0111893 A (TORAY INDUSTRIES, INC.) 11 October 2018 (2018-10-11)<br>    See entire document. | 1-10 |
| A | US 2010-0150976 A1 (SCHNITZLER, I. et al.) 17 June 2010 (2010-06-17)<br>    See entire document. | 1-10 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 January 2023** | **01 February 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| JP | 2015-039870 | A | 02 March 2015 | JP | 6154246 | B2 | 28 June 2017 |
| KR | 10-2015-0131062 | A | 24 November 2015 | CA | 2902804 | A1 | 18 September 2014 |
| | | | | CA | 2902804 | C | 31 March 2020 |
| | | | | CN | 105121163 | A | 02 December 2015 |
| | | | | CN | 105121163 | B | 18 July 2017 |
| | | | | EP | 2974862 | A1 | 20 January 2016 |
| | | | | EP | 2974862 | A4 | 27 July 2016 |
| | | | | EP | 2974862 | B1 | 27 May 2020 |
| | | | | ES | 2797484 | T3 | 02 December 2020 |
| | | | | JP | 2017-141983 | A1 | 16 February 2017 |
| | | | | JP | 6422341 | B2 | 14 November 2018 |
| | | | | KR | 10-1929886 | B1 | 17 December 2018 |
| | | | | US | 10119000 | B2 | 06 November 2018 |
| | | | | US | 2016-0002422 | A1 | 07 January 2016 |
| | | | | WO | 2014-141983 | A1 | 18 September 2014 |
| KR | 10-2012-0016416 | A | 24 February 2012 | KR | 10-1156600 | B1 | 20 June 2012 |
| | | | | WO | 2012-023779 | A2 | 23 February 2012 |
| | | | | WO | 2012-023779 | A3 | 31 May 2012 |
| KR | 10-2018-0111893 | A | 11 October 2018 | CA | 3014163 | A1 | 28 September 2017 |
| | | | | CA | 3014163 | C | 07 April 2020 |
| | | | | CN | 108778729 | A | 09 November 2018 |
| | | | | CN | 108778729 | B | 22 June 2021 |
| | | | | EP | 3434475 | A1 | 30 January 2019 |
| | | | | EP | 3434475 | A4 | 25 September 2019 |
| | | | | JP | 2019-164264 | A1 | 24 January 2019 |
| | | | | JP | 7077621 | B2 | 31 May 2022 |
| | | | | KR | 10-2157057 | B1 | 17 September 2020 |
| | | | | US | 11046061 | B2 | 29 June 2021 |
| | | | | US | 2019-0099990 | A1 | 04 April 2019 |
| | | | | WO | 2017-164264 | A1 | 28 September 2017 |
| US | 2010-0150976 | A1 | 17 June 2010 | DE | 102007016684 | A1 | 09 October 2008 |
| | | | | EP | 2129275 | A1 | 09 December 2009 |
| | | | | JP | 2010-523746 | A | 15 July 2010 |
| | | | | WO | 2008-122398 | A1 | 16 October 2008 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006272712 A

- JP 2003160202 A